Europäisches Patentamt

European Patent Office

Office européen des brevets

(11) Numéro de publication: **0 188 156 B1**

## FASCICULE DE BREVET EUROPEEN

(45) Date de publication de fascicule du brevet:
06.03.91

(51) Int. Cl.⁵: **G01L 19/12**

(21) Numéro de dépôt: **85402500.4**

(22) Date de dépôt: **16.12.85**

(54) Indicateur de surpression.

(30) Priorité: **17.12.84 FR 8419274**

(43) Date de publication de la demande:
**23.07.86 Bulletin 86/30**

(45) Mention de la délivrance du brevet:
**06.03.91 Bulletin 91/10**

(84) Etats contractants désignés:
**AT BE CH DE GB IT LI LU NL SE**

(56) Documents cités:
**CH-A- 418 677**
**FR-A- 2 479 465**
**GB-A- 808 577**
**US-A- 3 812 816**

(73) Titulaire: **Société Industrielle D'Exploitation des Moyens de Transport "SIMOTRA"**
**36, rue Guersant**
**F-75017 Paris(FR)**

(72) Inventeur: **Pflieger, Daniel**
**18 rue de la Fosse aux Astres**
**Villeneuve la Garenne Hauts de Seine(FR)**
Inventeur: **Le Du, Pierre**
**3 avenue des Jubennes**
**Villecresnes Val de marne(FR)**

(74) Mandataire: **Cabinet Pierre HERRBURGER**
**115, Boulevard Haussmann**
**F-75008 Paris(FR)**

## Description

La présente invention concerne un détecteur de pression destiné à être monté sur un réservoir ou un circuit sous pression servant au stockage ou au transport de matières dangereuses pour indiquer la présence d'une surpression dans ce réservoir ou dans ce circuit, ce réservoir ou ce circuit étant, par ailleurs, équipé d'un disque de rupture surmonté d'une soupape de pression, celle-ci n'entrant en action qu'après l'éclatement du disque de rupture.

Lorsque l'on stocke ou transporte des matières dangereuses dans des réservoirs, il est obligatoire de protéger ces réservoirs contre toute surpression incompatible avec sa conception. Pour ce fait, la réglementation impose la mise en place d'un disque de rupture surmonté d'une soupape de pression, celle-ci n'entrant en action qu'après l'éclatement du disque de rupture.

L'utilisateur de ce stockage ou ce réservoir de transport a donc besoin, à tout moment, de constater l'état du disque de rupture qui n'est pas visible de l'extérieur.

On a déjà proposé de placer entre le disque de rupture et la soupape, un manomètre qui, en cas de rupture du disque, le signale par élévation de pression. Or, on constate que ces manomètres sont peu fiables et sont souvent inopérants à court terme. De plus, si la pression ayant provoqué la rupture est retombée à zéro par suite d'une fuite de la soupape et d'un refroidissement du produit stocké ou véhiculé, le manomètre ne peut donner l'indication de la rupture, ce qui est très dangereux pour le personnel utilisateur au cours de nouvelles montées en pression. De plus, il est nécessaire que ces détecteurs soient étanches.

On connaît également par le document US-A-3 812 816, un détecteur destiné à détecter les variations d'une pression différentielle dépendant plus particulièrement de l'état de colmatage d'un filtre. Ce dispositif qui comporte un corps, une paroi transparente et un piston mobile est cependant extrêmement sophistiqué et ne pourrait pas être utilisé directement, en tant que dispositif de sécurité susceptible d'indiquer un état de surpression dans un réservoir ou un circuit.

La présente invention a pour but de remédier aux inconvénients des solutions connues et se propose de créer un détecteur de pression dans le cas d'un disque de rupture monté sur un réservoir ou circuit sous pression servant au stockage ou au transport de matières dangereuses. Ce détecteur de réalisation simple et de conception étanche est compatible avec les différentes matières stockées ou transportées.

A cet effet, l'invention concerne un détecteur de variation de pression du type décrit ci-dessus, caractérisé en ce qu'il se compose d'un corps creux rigide monté à l'une de ses extrémités sur le réservoir ou le circuit entre la soupape de pression et le disque de rupture, fermé à son extrémité opposé par un couvercle étanche délimitant une chambre à parois transparentes, et dans lequel est susceptible de se déplacer un piston mobile sous l'effet de la pression régnant dans le circuit ou le réservoir entre une position de repos dans laquelle il est logé dans sa totalité à l'intérieur du corps et une position de surpression dans laquelle il dépasse par l'une de ses extrémités à l'intérieur de la chambre à parois transparentes, de manière à indiquer l'éclatement du disque de rupture.

Ce détecteur peut être connecté au réservoir ou à la conduite dans lesquels une variation de pression est susceptible de se développer pour signaler, par lecture directe ou à distance, l'éclatement d'un disque de rupture.

Selon une autre caractéristique de l'invention, le détecteur comporte des organes de verrouillage susceptibles d'immobiliser le piston en position de repos et/ou en position de surpression et de le relâcher à partir de la position de repos sous l'effet d'une pression supérieure à une valeur de seuil prédéterminée pour l'amener en position de surpression.

Cette possibilité de réglage de la pression à partir de laquelle le détecteur peut être mis en oeuvre est particulièrement importante pour que ce dernier puisse fonctionner quel que soit le fluide présent dans le réservoir ou dans le circuit.

Selon une autre caractéristique de l'invention, les organes de verrouillage sont constitués par deux gorges parallèles ménagées sur le piston et coopérant avec une bille poussée par un ressort lui-même réglé en tension par une vis protégée par un couvercle étanche, de sorte que la bille vienne se loger dans l'une des gorges en position de repos ou dans l'autre gorge en position de surpression.

Bien entendu, pour que ce dispositif puisse fonctionner de manière convenable, il est nécessaire de prévoir un moyen de blocage autre en position de surpression, pour empêcher le piston de venir buter contre la face interne du couvercle.

A cet effet, le couvercle est monté sur le corps creux rigide par l'intermédiaire d'une bride annulaire portant la chambre transparente à l'une de ses extrémités et définissant à son extrémité opposée une surface d'appui coopèrant en position de surpression avec un épaulement prévu à cet effet dans le piston en deça de son extrémité dépassant dans la chambre.

Selon une autre caractéristique de l'invention, le piston comporte deux joints d'étanchéité servant à isoler la chambre transparente de la pression régnant dans le circuit ou dans le réservoir à détecter.

La présence, à ce niveau d'une parfaite étanchéité est indispensable pour obtenir un fonctionnement correct du dispositif.

Selon une autre caractéristique de l'invention, la chambre transparente est dimensionnée de sorte que la pression provoquée par le déplacement du piston soit suffisamment faible pour ne pas influer sur le verrouillage obtenu en position de surpression.

Par ailleurs, selon l'invention, l'apparition d'une surpression correspondant à l'amenée dans la chambre transparente de l'extrémité du piston mobile, peut être détectée soit visuellement, soit au moyen d'organes annexes de détection, le cas échéant, combinés à un système d'alarme.

A cet effet, et selon une autre caractéristique de l'invention, l'extrémité visible du piston comporte un insert destiné à permettre la détection de la position de surpression du piston mobile à l'aide d'un instrument de contrôle monté sur le couvercle et assurant la transmission à distance de l'information de surpression.

Bien entendu, cet insert peut être quelconque sans pour cela sortir du cadre de l'invention; parmi les diverses possibilités, on peut noter la mise en place d'un insert phosphorescent.

Les caractéristiques du détecteur qui fait l'objet de l'invention seront décrites plus en détail en se référant aux dessins annexés dans lesquels:

- la figure 1 est une vue en coupe du détecteur en position de repos,
- la figure 2 est une vue en coupe du détecteur en position de surpression,
- la figure 3 est une vue en coupe du détecteur monté sur un réservoir entre un disque de rupture et une soupape de sécurité.

Selon les figures, le détecteur se compose d'un corps creux rigide en acier 1, fermé par l'une de ses extrémités, par un couvercle étanche 2 constitué par une bride annulaire 26 surmontée par une chambre transparente 15, dont les parois sont en verre traité ou en polycarbonate incassable.

La bride annulaire 26 est fixée au corps rigide 1 au moyen d'une vis 10.

L'extrémité 5 du corps rigide 1 opposée au couvercle 2, est munie d'un filetage servant à assurer sa fixation étanche à la bride de raccordement 6 du réservoir ou du circuit dans lequel on veut pouvoir détecter une surpression.

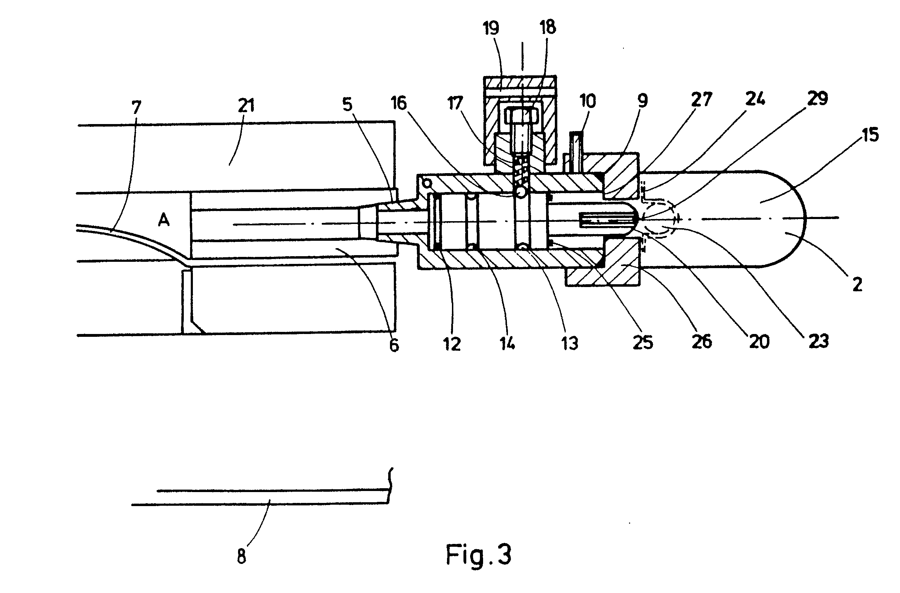

Selon la figure 3, la bride de raccordement 6 débouche dans l'espace A situé entre un disque de rupture 7 et une soupape de pression 21. Bien entendu, il ne s'agit là que d'une possibilité particulière de montage qui ne doit, en aucune façon, être considérée comme étant limitative de l'invention.

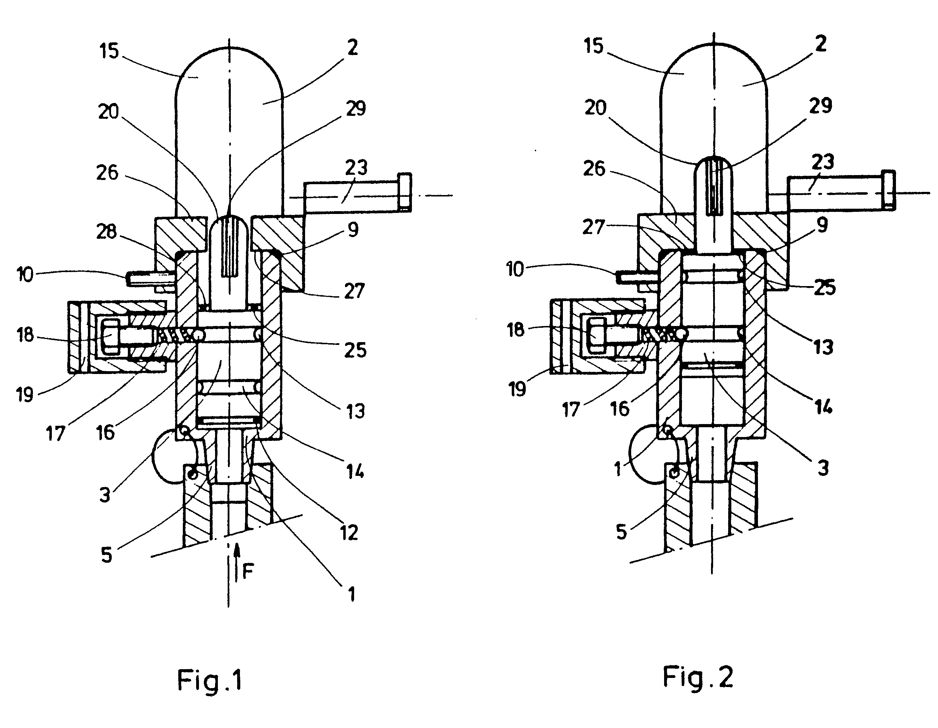

Par ailleurs, un piston 3 en matière inoxydable, du genre PTFE, est susceptible de se déplacer à l'intérieur du corps rigide 1 et sous l'effet de la pression existant dans le réservoir ou dans le circuit 8 et agissant selon la flèche F, entre une position de repos représentée sur la figure 1, dans laquelle il est totalement inclus à l'intérieur du corps 1, et une position de surpression représentée sur la figure 2, dans laquelle il dépasse par l'une de ses extrémités 20 à l'intérieur de la chambre à parois transparente 15 pour signaler la présence d'une surpression dans le réservoir 8 ou bien la rupture du disque 7.

Par ailleurs, et selon les figures 1 et 2, le piston 3 comporte des organes de verrouillage permettant son immobilisation en position de repos (figure 1) ou en position de surpression (figure 2).

Ces organes sont constitués par deux gorges parallèles 13 et 14 ménagées sur les parois externes du piston. Ces gorges coopèrent avec une bille 16 poussée par un ressort 17, lui-même réglé en tension par une vis 18. Un bouchon étanche 19 obture le verrouillage.

A partir de la position de repos, représentée sur la figure 1, et sous l'effet d'une force F supérieure à une force de seuil prédéterminée dépendant du réglage de la vis 18, la bille 16 se trouve repoussée vers le couvercle 19 pour entraîner le piston 3 dans la position représentée sur la figure 2, dans laquelle la bille vient se bloquer dans la gorge 14.

Simultanément, dans cette position, un épaulement 28 du piston 3, situé en deça de son extrémité 20 dépassant dans la chambre 15, vient en butée contre une surface d'appui 27 de la bride annulaire 26.

Par ailleurs, des joints d'étanchéité 12, 25 et 9 sont prévus sur le piston 3 et sur le corps rigide 1 pour assurer l'étanchéité du dispositif. La présence de ces joints est indispensable pour la bonne marche du dispositif.

En outre, l'extrémité visible 20 du piston 3 située au delà de l'épaulement 27 comporte un insert 29 destiné à permettre la détection à distance de la présence d'une surpression.

A cet effet, sur le couvercle 2 est monté, au moyen d'une vis 24, un détecteur de proximité 23 permettant cette possibilité de transmission à distance de l'insert 29, qui peut, par exemple, être constitué par un insert phosphorescent.

Etant donné ces caractéristiques, dans la position représentée sur la figure 2, l'extrémité 20 du piston 3 est dans la chambre transparente 15 du couvercle 2. Il est alors possible de constater par simple vision la présence d'une supression ou la destruction du disque d'éclatement 7 sans aucun risque puisque la phase gazeuse de la matière dangereuse stockée ou transportée dans le récipient 8 est bloquée par le piston 3 et ses joints 12 et 25.

Lors du déplacement du piston 3 dans la chambre transparente 15, une légère pression s'établit dans cette dernière. Elle est limitée à une valeur faible de l'ordre de $5.10^3$ pascal grâce au volume de la chambre 15; cette faible pression n'a aucune action sur le verrouillage obtenu en position de surpression.

Après avoir opéré la neutralisation chimique du réservoir 8, il est alors possible de changer le disque de rupture 7 et de remettre le dispositif dans la position de repos représentée sur la figure 1, en démontant le couvercle 2 en agissant sur la vis 10 et en repoussant manuellement l'extrémité 20 du piston 3, de telle manière que la bille 16 vienne se loger dans la gorge 13 correspondant à la position de repos.

La fabrication du détecteur selon l'invention fait appel à des matériaux inoxydables et inertes en présence des matières dangereuses.

Sa réalisation est particulièrement simple et son fonctionnement particulièrement fiable.

On pourra trouver d'autres formes de réalisation sans pour cela sortir du cadre de l'invention comme revendiqué.

## Revendications

1. Détecteur de pression destiné à être monté sur un réservoir ou un circuit sous pression servant au stockage ou au transport de matières dangereuses pour indiquer la présence d'une surpression dans ce réservoir ou dans ce circuit, ce réservoir ou ce circuit étant, par ailleurs, équipé d'un disque de rupture (7) surmonté d'une soupape de pression (21), celle-ci n'entrant en action qu'après l'éclatement du disque de rupture (7), détecteur caractérisé en ce qu'il se compose d'un corps creux rigide (1) monté à l'une de ses extrémités sur le réservoir ou le circuit (8) entre la soupape de pression (21) et le disque de rupture (7), fermé à son extrémité opposé par un couvercle étanche délimitant une chambre (15) à parois transparentes, et dans lequel est susceptible de se déplacer un piston mobile (3) sous l'effet de la pression régnant dans le circuit ou le réservoir (8) entre une position de repos dans laquelle il est logé dans sa totalité à l'intérieur du corps (1) et une position de surpression dans laquelle il dépasse par l'une de ses extrémités (20) à l'intérieur de la chambre à parois transparentes (15), de manière a indiquer l'éclatement du disque de rupture (7).

2. Détecteur selon la revendication 1, caractérisé en ce qu'il comporte des organes de verrouillage susceptibles d'immobiliser le piston (3) en position de repos et/ou en position de surpression et de le relâcher à partir de la position de repos sous l'effet d'une pression supérieure à une valeur de seuil prédéterminée pour l'amener en position de surpression.

3. Détecteur selon la revendication 2, caractérisé en ce que les organes de verrouillage sont constitués de deux gorges parallèles (13) et (14) ménagées sur le piston (3) et coopérant avec une bille (16) poussée par un ressort (17) lui même réglé en tension par une vis (18) protégée par un couvercle étanche (19) de sorte que la ville (16) vienne se loger dans la gorge (13) en position de repos ou dans la gorge (14) en position de surpression.

4. Détecteur selon l'une quelconque des revendications 1 à 3, caractérisé en ce que le couvercle (2) est monté sur le corps creux rigide (1) par l'intermédiaire d'une bride annulaire (26) portant la chambre transparente (15) à l'une de ses extrémités et définissant à son extrémité opposée, une surface d'appui (27) coopérant en position de surpression avec un épaulement (28) prévu à cet effet dans le piston (3) en deçà de son extrémité (20) dépassant dans la chambre (15).

5. Détecteur selon l'une quelconque des revendications 1 à 4, caractérisé en ce que le piston (3) comporte deux joints d'étanchéité (12) et (25) servant à isoler la chambre transparente (15) de la pression régnant dans le circuit ou dans le réservoir à détecter.

6. Détecteur selon l'une quelconque des revendications 1 à 5, caractérisé en ce que la chambre transparente (15) est dimensionnée de sorte que la pression provoquée par le déplacement du piston (3) soit suffisamment faible pour ne pas influer sur le verrouillage obtenu en position de surpression.

7. Détecteur selon l'une quelconque des revendications 1 à 6, caractérisé en ce que l'extrémité visible (20) du piston (3) comporte un insert (29) destiné à permettre la détection de la position de surpression du piston mobile (3) à l'aide d'un instrument de contrôle (23) monté sur le couvercle (2) et assurant la transmission à distance de l'information de surpression.

## Claims

1. pressure detector intended to be mounted on a reservoir or a circuit under pressure serving for the storage or for the transport of dangerous substances, to indicate the presence of an excess pressure in this reservoir or in this circuit, this reservoir or this circuit being, moreover, equipped with a rupture disk (7) surmounted by a pressure valve (21), the latter only coming into action after the bursting of the rupture disk (7), the detector being characterized in that it is composed of a rigid hollow body (1) which is mounted at one of its ends on the reservoir or the circuit (8) between the pressure valve (21) and the rupture disk (7), closed at its opposite end by an impermeable cover which delimits a chamber (15) with transparent walls, and in which a mobile piston (3) is capable of being displaced under the effect of the pressure prevailing in the circuit or the reservoir (8) between a rest position, in which it is housed in its entirety inside the body (1), and an excess-pressure position, in which it projects with one of its ends (20) inside the chamber with transparent walls (15), so as to indicate the bursting of the rupture disk (7).

2. Detector according to Claim 1, characterized in that it comprises locking elements which are capable of immobilizing the piston (3) in the rest position and/or in the excess-pressure position and of releasing it from the rest position under the effect of a pressure greater than a predetermined threshold value in order to bring it into the excess-pressure position.

3. Detector according to Claim 2, characterized in that the locking elements are constituted by two parallel grooves (13) and (14) which are made on the piston (3) and interact with a ball (16) which is pushed by a spring (17) which is itself tensionally adjusted by a screw (18) protected by an impermeable cover (19), so that the ball (16) comes to lodge itself in the groove (13) in the rest position or in the groove (14) in the excess-pressure position.

4. Detector according to any one of Claims 1 to 3, characterized in that the cover (2) is mounted on the rigid hollow body (1) by means of an annular collar (26) which supports the transparent chamber (15) at one of its ends and defines, at its opposite end, a support surface (27) which, in the excess-pressure position, interacts with a shoulder (28) provided for this purpose in the piston (3) on this side of its end (20) which projects into the chamber (15).

5. Detector according to any one of Claims 1 to 4, characterized in that the piston (3) comprises two gaskets (12) and (25) which serve to separate the transparent chamber (15) from the pressure prevailing in the circuit or in the reservoir to be detected.

6. Detector according to any one of Claims 1 to 5, characterized in that the transparent chamber (15) is dimensioned so that the pressure caused by the displacement of the piston (3) is sufficiently weak not to influence the locking obtained in the excess-pressure position.

7. Detector according to any one of Claims 1 to 6, characterized in that the visible end (20) of the piston (3) comprises an insert (29) intended to allow the detection of the excess-pressure position of the mobile piston (3) with the aid of a monitor (23) which is mounted on the cover (2) and provides for the remote transmission of the excess-pressure information.

## Ansprüche

1. Druckanzeigevorrichtung zur Anbringung an einem Druckbehälter oder einer Druckleitung für eine Lagerung oder einen Transportgefährlicher Stoffe zum Anzeigen des Vorhandenseins eines Überdrucks im Behälter oder in der Leitung, wobei der Behälter oder die Leitung im übrigen mit einer von einem Druckventil (21) übergriffenen Berstscheibe (7) versehen ist, dadurch gekennzeichnet, daß die Anzeigevorrichtung einen starren Hohlkörper (1) umfaßt, der mit einem seiner Enden auf den Behälter oder der Leitung (8) zwischen dem Druckventil (21) und der Berstscheibe (7) angebracht, an seinem gegenüberliegenden Ende von einen eine Kammer (15) mit transparenter Wandung begrenzenden dichten Deckel geschlossen und in dem ein unter der Wirkung des in der Leitung oder im Behälter (8) herrschenden Drucks beweglicher Kolben (3) zwischen einer Ruhestellung, in der er insgesamt im Inneren des Hohlkörpers (1) aufgenommen ist, und einer Überdruckstellung verlagerbar ist, in der er mit einem seiner Enden (20) in das Innere der Kammer mit transparenter Wandung (15) hineinragt, um so das Bersten der Berstscheibe (7) anzuzeigen.

2. Anzeigevorrichtung nach Anspruch 1, dadurch gekennzeichnet, daß sie Verriegelungsorgane für eine Festlegung des Kolbens (3) in der Ruhestellung und/oder der Überdruckstellung und zu dessen Freigeben aus der Ruhestellung unter der Wirkung eines einen vorbestimmten Grenzwert übersteigenden Druckes zu seiner Hinführung in die Überdruckstellung umfaßt.

3. Anzeigevorrichtung nach Anspruch 2, dadurch gekennzeichnet, daß die Verriegelungsorgane von zwei parallelen Rillen (13 und 14) gebildet sind, die in den Kolben (3) eingearbeitet sind und mit einer Kugel (16) zusammenwirken, die von einer Feder (17) beaufschlagt ist, die ihrerseits von einer durch einen dichten Deckel (19) geschützten Schraube (18) spannungsgeregelt ist, derart, daß die Kugel (16) in die Rille (13) in Ruhestellung oder in die Rille (14) in Überdruckstellung einrastet.

4. Anzeigevorrichtung nach einem beliebigen der Ansprüche 1 bis 3, dadurch gekennzeichnet, daß der Deckel (2) auf dem starren Hohlkörper (1) mittels eines kreisförmigen Bundringes (26) angebracht ist, der an einem seiner Enden die transparente Kammer (15) trägt und an seinem gegenüberliegenden Ende eine Anlagefläche (27) bildet, die in Überdruckstellung mit einer Schulter (28) zusammenwirkt, die zu diesem Zweck am Kolben (3) auf der Seite seines in die Kammer (15) hineinragenden Endes (20) vorgesehen ist.

5. Anzeigevorrichtung nach einem beliebigen der Ansprüche 1 bis 4, dadurch gekennzeichnet, daß der Kolben (3) zwei Dichtungen (12 und 25) zum Abdichten der transparenten Kammer (15) gegenüber den anzuzeigenden Druck in der Leitung oder dem Behälter aufweist.

6. Anzeigevorrichtung nach einem beliebigen der Ansprüche 1 bis 5, dadurch gekennzeichnet, daß die transparente Kammer (15) derart bemessen ist, daß der durch die Verlagerung des Kolbens (3) hervorgerufene Druck so schwach ist, daß die in der Überdruckstellung erreichte Verriegelung nicht beeinflußt wird.

7. Anzeigevorrichtung nach einem beliebigen der Ansprüche 1 bis 6, dadurch gekennzeichnet, daß das sichtbare Ende (20) des Kolbens (3) einen Einsatz (29) zur Ermöglichung einer Erkennung der Überdruckstellung des beweglichen Kolbens (3) mit Hilfe eines Kontrollinstruments (23) aufweist, das am Deckel (2) angebracht ist und eine Fernübertragung der Überdruckinformation gewährleistet.

Fig. 2

Fig. 1

7

Fig.3

EP 0 188 156 B1